Europäisches Patentamt

European Patent Office

Office européen des brevets

(11) Publication number: **0 320 470**
**A2**

## EUROPEAN PATENT APPLICATION

(21) Application number: **88830529.9**

(22) Date of filing: **09.12.88**

(51) Int. Cl.⁴: **B 60 R 25/10**
**G 08 B 13/00**

(30) Priority: **11.12.87 IT 8368187**

(43) Date of publication of application:
**14.06.89 Bulletin 89/24**

(84) Designated Contracting States: **DE ES FR GB**

(71) Applicant: **ROLER s.r.l.**
**Via Sanvito Silvestro, 135**
**I-21100 Varese (IT)**

(72) Inventor: **Stasi, Paolo**
**ROLER s.r.l. Via Sanvito Silvestro, 135**
**I-21100 Varese (IT)**

(74) Representative: **Pellegri, Alberto et al**
**c/o Società Italiana Brevetti S.p.A. Via Cavour, 9**
**I-21100 Varese (IT)**

(54) Remotely partitionable antitheft system.

(57) A partitionable antitheft system remotely activable and disactivable utilizes the same remote control for commanding both the activation/disactivation of the antithievery system and for excluding (partitioning) a certain function of the system. According to a preferred embodiment, the partitioning takes place by maintaining pressed the push-button for remotely activating the antitheft system for a time exceeding a certain reset time interval. By further persisting to keep pressed the push-button, it is possible to implement also a second partitioning by excluding a second function of the system and so on. Existing systems may be retrofitted according to the present invention by adding a ramp generator circuit with an appropriate time constant which is triggered by the decoded signal received by the antitheft system and by utilizing the output signal of such a ramp generator circuit for implementing a reset function upon a particular flip-flop acting as a switch to enable or disable a certain system's function.

Bundesdruckerei Berlin

**Description**

## REMOTELY PARTITIONABLE ANTITHEFT SYSTEM

The present invention relates to antitheft and/or alarm systems which may be controlled by means of a pocketable remote control, and in particular systems installed on vehicles, boats and the like.

Modern antitheft systems generally utilize a plurality of sensors for detecting intrusion attempts into the protected area or volume, unwarranted actions, etc., the electrical output signals of which are fed to a trigger box and activate acoustical, luminous alarms and/or cause the implementation of suitable countermeasures such as blocking the fuel flow, disabling the ignition in an internal-combustion engine, etc..

For instance, in cars' antitheft systems an often employed sensor is the so-called volumetric or space sensor, which is sensitive to any minimum shifting of objects inside an enclosed volume. It is often necessary or useful to exclude such a sensor from the alarm system in order to leave the windows or an overhead port open or a canvas hood lowered in a convertible car, or to be able to leave animals or small children or moving objects inside the car without these causing undesired alarms though activating the antitheft system in order to maintain a certain degree of protection of the unattended car.

There are, therefore, antitheft systems, defined as partitionable, wherein it is possible to exclude one or the other of the installed sensors, in the above described case the volumetric or space sensor. This exclusion is commonly effected by manually acting on a dedicated switch assembled on the vehicle and which is capable of disabling the input to the trigger box of the system of the signal produced by such a sensor or of interrupting the electrical supply to the sensor itself.

Such a known arrangement has the drawback of requiring the user, who is commonly used to activate and disactivate the antitheft system by simply acting on a press-button of a pocketable remote control, to check the state of the partitioning switch assembled on the car and act upon this switch according to necessities.

It is therefore a main objective of the present invention to provide an antitheft system which is partitionable by means of the same pocketable remote control which is used for remotely activating and disactivating the antitheft system itself.

In accordance to a particularly preferred embodiment of the invention, the partitioning of the antitheft system may be effected by simply keeping depressed the same push-button for the activation of the antitheft system of the pocketable remote control for a period of time longer than a certain preset time. In other words, the partitioning impulse is obtained by means of a remote control of a kind commonly used for activating/disactivating the whole antitheft system by simply persisting beyond a certain measure in pressing the activation push-button.

An advantage of such a preferred embodiment is represented by the fact that the pocketable remote control does not require an additional dedicated push-button for commanding the partitioning. The pocketable remote control may therefore conveniently maintain its shape and small dimensions.

An additional advantage is represented by the fact that, in many instances, it is possible to retrofit an already installed existing system, for implementing such a remotely controlled partition function by utilizing, almost entirely the hardware already available.

The different aspects and advantages of the invention will be more easily understood through the following description of a remotely partitionable antitheft system of the invention with reference to the annexed drawing showing a basic block diagram of the electronic reception means of a signal emitted by a pocketable battery powered remote control.

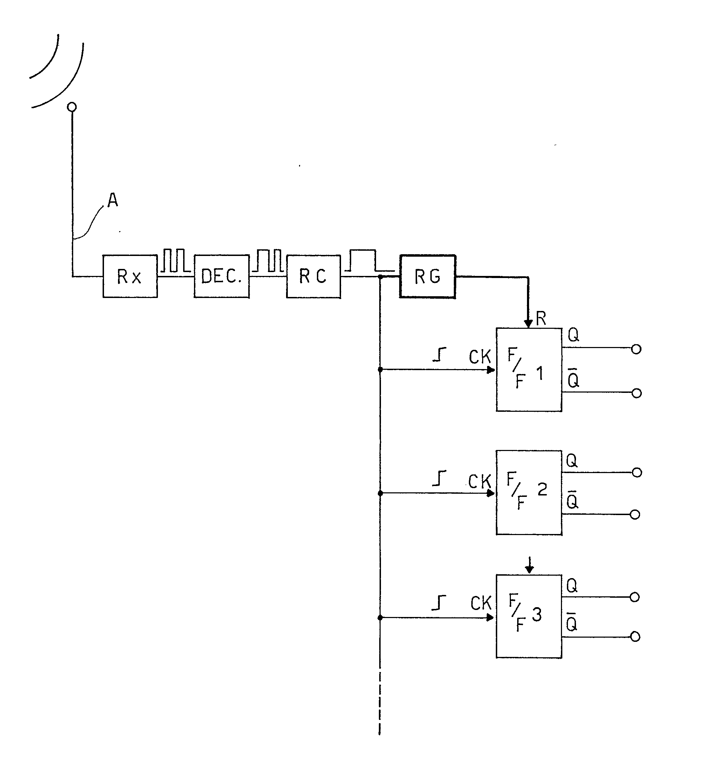

Commonly pocketable remote controls of antitheft systems are minute transmitters of modulated electromagnetic waves with substantially fixed characteristics both in terms of carrier frequency and modulation envelope. Often these remote controls have a single push-button, which upon depression causes the emission of a train of modulated electromagnetic waves as long as the button remains pressed. The modulation of the carrier electromagnetic waves constitutes a codification of the emitted signal. The antitheft system installed, for example, on an automobile, is provided with appropriate electronic means for receiving the coded (modulated) signal transmitted by the remote control. These reception means are also depicted in the figure which shows these reception means modified in accordance with the present invention.

The reception means of the antitheft system comprise a transducer, in the example shown an antenna A, capable of generating an electrical signal replica of the received signal. The received signal is detected by means of a detector circuit Rx thus obtaining an electrical signal replica of the codification (modulation) signal of the received signal. This replica signal is fed to a decoder circuit DEC capable of recognizing or not as valid the codification possessed by the received signal. In case the received signal is recognized by its modulation as a signal emitted by a remote control of the system, the decoder circuit generates on an output terminal a certain electrical signal which, by means of an integrating stage, is suitably equalized in order to be made compatible in terms of shape, duration and level, for driving, as a clock signal, a plurality of flip-flops F/F1, F/F2, F/F3 ......, which act as enable/disable switches of as many sensors employed by the antitheft system.

These flip-flops are well known and are generally provided with a clock input terminal CK and with two output terminals Q and $\overline{Q}$, which take the other one of two possible bistable configurations of inverted logic levels every time a positive voltage ramp signal reaches the clock input CK thereof.

Therefore with a system of this type, every time the push-button on the remote control is pressed, the status of the outputs of all the flip-flops is inverted, thus commanding in succession the activation and the disactivation of all the sensors and of all the prevention functions contemplated by the antitheft system (actuators).

A way by which an existing system of this type may be rendered partitionable by utilizing the same single push-button remote control for the enablement/disablement of the entire antitheft system is depicted by means of a thicker line schetching in the same figure.

The flip-flops utilized as remotely controlled switches of various functions of the antitheft system are generally provided with a fourth input terminal known as reset terminal R, which normally is not utilized for these applications of the flip-flops. This reset input in flip-flops has notably a prevaling characteristic upon any other input thereof in determining a certain output configuration of the flip-flop.

In the embodiment shown, the decoded and equalized replica signal, which is used for driving the various flip-flops, is further fed to the input terminal of a ramp generator circuit RG, which generates on an output terminal a signal having a progressively increasing level for as long as the replica signal remains applied to its input terminal. Also such a circuit is well known to the skilled technician and may, in a most simplified embodiment be formed by a simple integration passive RC network.

As long as there is a signal applied to the input of such a ramp generator circuit RG, the output voltage therefrom will continue to raise until reaching a level such as to determine in a particular flip-flop, to which such an output signal of the ramp generator circuit RG is applied on the reset terminal thereof, the resetting of a configuration of the two outputs Q and $\overline{Q}$ of the flip-flop which corresponds to the OFF configuration for the particular sensor (or actuator) driven by such a flip-flop.

In operation, upon pressing the push-button on a remote control for activating the antitheft system, all the sensors and all the functions of the entire antitheft system are enabled by means of said decoded and equalized replica signal fed as a clock signal to all the clock terminals of the flip-flop "switches". By keeping pressed the push-button beyond a certain preset period of time, the output signal of the ramp generator circuit RG eventually reaches a level such as to be logically accepted as a valid reset signal by the particular flip-flop which controls the function or the sensor which must be excluded. Therefore the flip-flop which was momentarily driven to an ON configuration of the respective sensor or actuator of the antitheft system upon the arrival on its clock terminal CK of the positive ramp of the decoded and equalized replica signal, **is reset in an OFF** condition and the respective sensor or actuator of the antitheft system is excluded as desired.

In the embodiment shown in the figure, this partition function actuated by means of the reset signal fed to the flip-flop reset terminal R is implemented on the flip-flop F/F1.

Of course, such a partition or exclusion function may be implemented also on other flip-flops in order to exclude simultaneously two or more sensors and/or actuators of the system.

It is also possible to duplicate or triplicate the partition system by utilizing two or more distinct ramp generator circuits with time constants suitably different in order to implement a progressive partition or an exclusion function of two or more sensors and/or actuators of the antitheft system by applying the output signal of a first ramp generator to a commanding flip-flop of a certain function and by applying the output signal of a second ramp generator to another commanding flip-flop. In this way by pressing the activation push-button of the antitheft system on the remote control the activation of all the sensors and actuators of the system will be effected first, afterwards by maintaining pressed the push-button for a sufficiently long period of time, the exclusion of a particualr sensor or actuator will be effected and eventually by insisting further to maintain pressed the push-button, a second sensor or actuator of the system will be excluded and so on.

Of course, the time intervals during which the push-button on the pocketable remote control must be maintained pressed for effecting, in succession:
- activation of the antitheft system;
- exclusion of at least a first function of the system (first partition);
- eventual exclusion of at least a second function of the system (second partition); etc.,
may be precisely preset by adjusting the time constant of the ramp generator circuit or circuits in function of the level of the reset signal required by the particular flip-flops utilized.

These time intervals are also sufficiently long, for example of about 6-10 seconds, so that the user may confortably discriminate the executed commands. Moreover the remote control is preferably provided with appropriate luminous (LED) or acustic indicating means which confirm to the user the sequence of transmitted commands or the actual operating status of the antitheft system.

Of course, the invention may also be practiced in other forms of embodiment such as by providing one or more dedicated push-buttons on the remote control for excluding the relative sensor or function of the system utilizing differently coded signals although these alternative forms of embodiment are decisively more cumbersome and costly.

**Claims**

1. A partitionable antitheft system comprising a remote control for activating/disactivating the system and characterized in that the exclusion of a particular function of the antithievery system is effected by means of said remote control.

2. The antitheft system according to claim 1, wherein an exclusion command for a particular function of the antitheft system is effected by maintaining pressed a push-button of said remote control for activating said antitheft system for a time longer than a preset time.

3. The antitheft system according to claim 1, wherein the exclusion command of a particular function of the antitheft system is effected by means of a dedicated push-button present on the remote control.

4. The antitheft system according to any one of the preceding claims, wherein the system comprises at least a pocketable battery operated remote control capable of emitting a coded signal which is receivable at distance by reception means of the antitheft system, said reception means comprising a transducer capable of generating an electrical signal replica of the received signal, decoding means of said replica signal, equalizing means of said decoded replica signal and a plurality of flip-flops, each being provided with at least a clock input terminal to which said decoded and equalized replica signal is applied and operating as an enabling/disabling switch of a relative sensor or actuator of the antitheft system by taking a ON or OFF output configuration, and wherein the system comprises

at least a ramp generator circuit having an input and an output terminals, said decoded and equalized replica signal being also applied to the input terminal thereof;

the output terminal of said ramp generator circuit being connected to a reset terminal of the flip-flop commanding a particular excludable sensor or actuator;

said flip-flop being reset in an OFF configuration when said decoded and equalized replica signal has a duration sufficient for the output signal of said ramp generator circuit to reach a level sufficient to cause the resetting to an OFF configuration of the relative flip-flop.

5. The antitheft system according to claim 4, wherein said coded signal is a modulated electromagnetic signal.

6. The system according to anyone of the preceding claims wherein the antitheft system is installed on an automobile and the excludable sensor is a volumetric sensor.